# EUROPEAN PATENT SPECIFICATION

(11) **EP 0 870 538 B1**
(45) Date of publication and mention of the grant of the patent: **11.06.2003**
(21) Application number: 98302725.1
(22) Date of filing: 07.04.1998
(51) Int. Cl.: B01J 8/02, B01J 8/04, B01J 8/00, B01D 53/04

(54) **Radial flow adsorption vessel**
Adsorptionsreaktor mit radialer Strömung
Réacteur d'adsorption à écoulement radial

(30) Priority: 11.04.1997 US 840090
(43) Date of publication of application: 14.10.1998
(73) Proprietor: AIR PRODUCTS AND CHEMICALS, INC., Allentown, PA 18195-1501 (US)
(72) Inventor: Tentarelli, Stephen Clyde, Fogelsville, PA 18051 (US)
(74) Representative: Burford, Anthony Frederick

(56) References cited:
- EP-A- 0 820 798
- US-A- 1 682 787
- US-A- 3 754 078
- US-A- 4 388 086
- US-A- 4 541 851
- US-A- 4 880 603

## Description

The present invention pertains to radial flow adsorption vessels of the type wherein gas flow through the vessel is in a generally U-shaped flow pattern, effected by having the inlet and outlet manifolds on the same end of the vessel.

Radial flow adsorption vessels have found particular use in a conventional cryogenic air separation plant where they are used as a front end purification system to remove certain unwanted contaminants from the feed air stream, prior to the feed air stream entering a cryogenic separation unit.

F. G. Kerry describes such systems in an article titled "Front-Ends for Air Separation Plants-The Cold Facts," Chemical Engineering Progress, August 1991. Other descriptions of the use of adsorption vessels in air separation plants are described in a paper titled "Adsorption Purification For Air Separation Units" by M. Grenier, J. Y. Lehman, P. Petit and D. V. Eyre, Cryogenic Process and Equipment, book number G00283, American Society of Mechanical Engineers (1984). Another description of air separation and the use of radial flow adsorbers is in an article by Dr. Ulrich von Gemmingen titled "Designs of Adsorptive Dryers in Air Separation Plants" Linde AG, Reports on Science and Technology (1994).

US-A-4,541,851 discloses two different radial flow adsorption vessels. In a first vessel the flow configuration of gas through the adsorber is in the general configuration of a Z, wherein the introduction and removal of gas from the vessel are on opposite ends of an elongate, cylindrical vessel. The process fluid (gas) enters through a nozzle on one end (bottom nozzle), flows axially upwardly through an outer annulus in the vessel which contains the adsorptive material, then flows radially inward through the adsorbent material and a filter element and then into a center channel where it flows axially upward and out of the vessel through a nozzle on the top of the vessel, the vessel being oriented in a vertical direction. This embodiment device permits reversal of the flow direction through the vessel. In another embodiment, the radial flow vessel has the inlet and outlet nozzles located on the bottom of the vessel which is oriented in a generally upright position. Process fluid enters through one nozzle, flows axially upward through the outer annulus, flows radially inward through the adsorbent bed and into a center channel where it then flows axially downward and out of the vessel. Perforated walls define the flow channels which produce a generally U-shaped flow pattern as the fluid flows through the vessel.

AU-A-57158/90, discloses a radial flow adsorption vessel wherein the flow pattern, from an inlet on one end of the vessel to an outlet located on the opposite end of the vessel, is in the general shape of a Z. The flow path through this vessel is similar to the first vessel discussed above in regard to US-A-4,541,851. The process fluid enters through a bottom nozzle, flows axially upward in an outer annulus, flows radially through an adsorbent bed and a dust sieve element, and then into a center channel where it flows axially upward and out of the vessel through a nozzle located at the top of the vessel, the vessel being oriented in a generally vertical position.

Both said US and Australian vessels include a conical member in the central channel of the generally Z-shaped flow pattern vessel, to improve the uniformity of flow through the adsorbent bed, because the Z-flow manifolding technique (entrance and exit on opposite ends of the vessel) produces inherently poor flow distribution when compared to a U-shaped flow manifolding technique, given the dimensions typical of a radial flow adsorption vessel, for front-end systems. The conical member does not work for flow in both directions. It corrects maldistribution for flow in one direction, but worsens it for flow in the opposite direction.

In the prior art vessels utilizing a Z-shaped flow pattern, the primary methods to reduce flow maldistribution with flow in both directions was to either increase the flow area in the internal channels, thus increasing the vessel size and the cost of the vessel, or to increase the pressure drop through the bed thus increasing the power cost to operate the process.

U.S. Filter/Johnson Screens, of St. Paul Minnesota offers radial flow reactor screens for radial flow vessels (reactors) that use a generally Z-shaped flow pattern for the process fluids.

US-A-1,682,787 discloses a catalytic apparatus in which a catalyst chamber defined between perforated annular walls is fed with reaction gases passing from an internal coaxial feed pipe via a serpentine path defined by radially spaced coaxial gas impermeable baffles. The end of the serpentine path extends in the axial direction along the radially inner of the perforated and the reaction gases pass through the catalyst chamber at approximately right angles to the axis.

US-A-4,880,603 discloses a catalytic apparatus in which an annular catalyst basket having perforated cylindrical walls is located within an annular vessel having gastight cylindrical wall thereby defining a first annular space between the respective outer cylindrical walls and a second annular space between the respective inner walls. Reaction gas is fed to one of the annular spaces and reacted gas is withdrawn from the other annular space. The cross-sectional area of the annular space from which the reacted gas is withdrawn is equal to or greater than that of annular space to which the gas is fed. In the exemplified embodiments, a central gas tube extends coaxially through the annular vessel.

EP-A-0820798 (published 28^{th} January 1998 in pursuance of an application filed 22^{nd} July 1997 and claiming a priority date of 23^{rd} July 1996) discloses a radial bed adsorber for vacuum/pressure swing adsorption in which an annular adsorption bed having porous inner and outer walls is positioned within a housing with the outer wall spaced from the housing to define a gas feed channel and the inner wall spaced from an inner tank to define a product flow channel. In the exemplified embodiment, flow through the product channel is in the opposite direction to flow in the gas feed channel and an outlet pipe communicating with the product flow channel extends axially through the inner tank.

According to a first aspect, the present invention provides a vessel of the type having a cylindrical elongate outer shell having first and second ends closed by end plates or heads, at least one annular shaped bed containing particulate material disposed longitudinally between the outer shell and a central axis of rotation of the shell, inlet means on one end of the vessel to introduce a fluid into the vessel to pass through the bed and outlet means on an opposite end of the vessel to remove the fluid from the vessel after passing through the bed, baffle means in the vessel to impart a generally U-shaped flow pattern to the fluid whereby fluid flow through the vessel from the inlet means to the outlet means is in a generally serpentine pattern, characterized in that said baffle means is a cylindrical baffle disposed between said outer shell and said bed or between said bed and said central axis of rotation and in that said baffle includes by-pass means permitting a small portion of the fluid flow through the vessel to by-pass said baffle to correct flow maldistribution attributed primarily to frictional pressure losses in the flow passages defined between the baffle and the bed.

Incorporation of cylindrical internal baffles into a cylindrical shaped radial flow adsorption vessel, converts what was heretofore a generally Z-shaped flow pattern into a generally U-shaped flow pattern inside the vessel, while still permitting use of inlet and outlet nozzles on opposite ends of the vessel. In one embodiment of the invention the baffle is placed between an outer wall of the vessel and an inner annular shaped bed or beds of adsorbent, to impart a reverse U-shape or serpentine flow pattern to the process fluid as it is conveyed from the outer wall to the central conduit of the vessel. In another embodiment of the invention the baffle is incorporated between the adsorbent bed and the central longitudinal axis of the vessel, to impart the reverse U-shape or serpentine flow pattern to the process gas during its progression from the adsorption bed to the outlet nozzle of the vessel.

A radial flow adsorption vessel according to the present invention can be operated with fluid flow in both directions, i.e. flow in the bottom and out the top or flow in the top and out the bottom. The method and apparatus of the invention permit correction of flow maldistribution for flow in both directions. Front end purification cycles require flow in both directions.

As mentioned above, in one embodiment the baffle is disposed between an outer wall of the vessel and the bed. Suitably, this baffle is a fluid impervious cylindrical baffle disposed on an impervious bottom plate supporting the annular bed and extending longitudinally along a major portion of the bed, the baffle defining a flow passage between itself and the outer wall and between itself and the bed. The baffle can be adjacent the impervious bottom plate and the bottom plate can act as a flow director to direct fluid to the passage between the outer wall and the baffle.

The flow path in this embodiment includes by-pass means to permit a small portion of the fluid flow through the vessel to by-pass the baffle to correct flow maldistribution attributed primarily to frictional pressure losses in the flow passages adjacent the bed. The by-pass means suitably includes passages through the baffle permitting more by-pass fluid at an end of the baffle opposite to an end of the baffle which causes the fluid flow to reverse its direction. These passages preferably comprise a series of circular apertures varying in diameter and spacing from the end of the baffle supported by the bottom plate to an opposite end of the baffle, the diameter being larger and the spacing being closer at the end supported by the bottom plate, than at the opposite end of the baffle.

In a second embodiment, the baffle means is disposed between the bed and the axis of rotation of the shell. This baffle suitably is a fluid impervious concentric baffle disposed between the bed and the axis of rotation of the shell. The baffle preferably is cylindrical and extends along a major portion of the bed from a top of the vessel to a bottom of the vessel, the baffle defining flow passages between itself and the axis of rotation and between itself and the bed.

The flow path of this embodiment also includes by-pass means to permit a small amount of fluid flow through the vessel to by-pass the baffle to correct flow maldistribution caused by frictional pressure losses in the flow passages adjacent the bed. The by-pass means suitably include passages through the baffle permitting more by-pass fluid at an end of the baffle opposite to an end of the baffle which causes the fluid flow to reverse its direction. Preferably, the passages comprise a series of circular apertures varying in diameter and spacing from the end of the baffle adjacent the top of the vessel to an opposite end of the baffle, the diameter being larger and the spacing being closer at the end of the baffle adjacent the top of the vessel.

The present invention also provides a method for imparting a generally U-shaped flow pattern to fluids flowing inside a vessel of the type having an elongate closed cylindrical housing having disposed therein at least one annular shaped bed of an adsorbent material, the housing having inlet and outlet means on respective opposite ends for admitting fluid to, and removing fluid from, the bed, which method comprises installing a cylindrical baffle inside the vessel between said outer shell and said bed or between said bed and said central axis of rotation to impart a generally U-shaped flow pattern to the fluid prior to the fluid entering the bed and/or after the fluid exits the bed whereby, fluid flow through the vessel from the inlet means to the outlet means is in a generally serpentine pattern, said baffle having by-pass means permitting a small portion of the fluid flow through the vessel to by-pass said baffle to correct flow maldistribution attributed primarily to frictional pressure losses in the flow passages defined between the baffle and the bed.

In one embodiment of the method of the invention, the installation comprises installing a cylindrical baffle between an outer wall of the housing and the bed, the baffle directing fluid flowing through the housing along a path defined by the baffle and the outer wall of the housing and in a reverse direction along a path defined by the baffle and the bed.

In another embodiment of the method of the invention, the installation comprises installing a cylindrical baffle between an axis of rotation of the housing and the bed, the baffle directing fluid flowing through the bed along a path defined by the baffle and the bed of the housing and in a reverse direction along a path defined by the baffle to direct fluid flow out of the vessel.

In either of the two method embodiments, the baffle comprises by-pass means to permit a small amount of fluid flow through the vessel to by-pass the baffle.

The following is a description by way of example only and with reference to the accompanying drawings of presently preferred embodiments of the invention. In the drawings:
Figure 1 is a longitudinal cross sectional view of a radial flow adsorption vessel according to one embodiment of the invention;
Figure 2 is a view taken along lines 2-2 of Figure 1;
Figure 3 is longitudinal cross sectional view of a radial adsorption vessel according to a second embodiment of the present invention;
Figure 4 is a cross sectional view of the vessel of Figure 1 showing the placement of an additional annular adsorbent bed; and
Figure 5 is a fragmentary view of a portion of the wall of a baffle according to the present invention illustrating incorporation of flow by pass into the baffle.

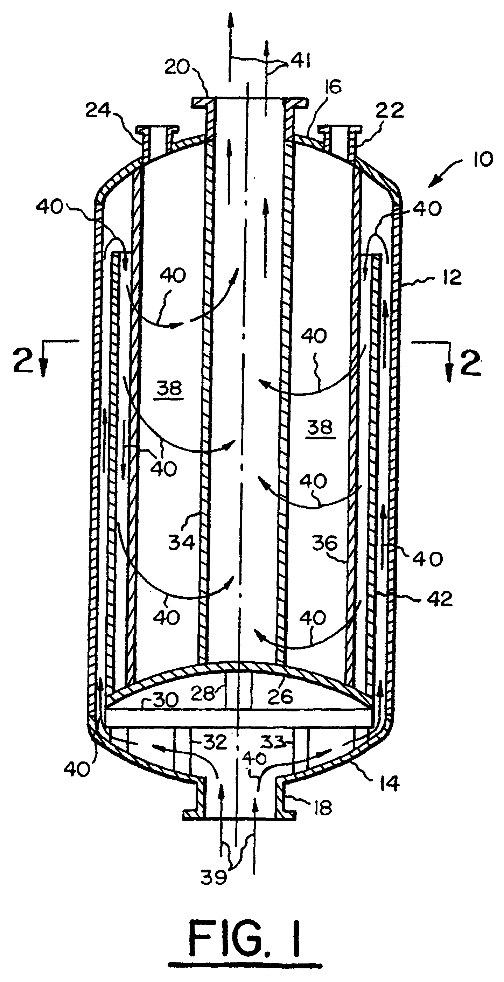

Referring to the drawings, Figure 1 shows a vessel 10 according the present invention. Vessel 10 has an outer shell 12, a first or bottom end 14 closed by a generally hemispherical head and a second or top end 16 which is also closed by a generally hemispherical head. First end 14 contains an inlet conduit or nozzle 18. Second end 16 contains an outlet conduit or nozzle 20.

Head 16 also includes fill-ports 22, 24 for introducing and removing adsorbent from the interior of the vessel 10, as will hereinafter be fully explained.

Disposed within the interior of vessel 10 is a rigid impervious suspended bottom 26 which is supported by a series of webs 28, 30 and supports 32, 33 as is well known in the art. Suspended bottom plate 26 supports a first concentric conduit 34 which communicates with the outlet nozzle 20. Disposed concentrically around and spaced apart from the central conduit 34 is a second cylindrical wall or a conduit 36 which defines annular space 38 into which the adsorbent material can be placed via access ports 22, 24. Alternatively, the bottom plate 26 can be supported by central conduit 34 and cylindrical conduit 36. The walls of the central conduit 34 and the cylindrical conduit 36 are screen type constructions such as offered for sale by Johnson Filtration Systems to permit the flow of process fluid (gas) through the bed 38 as shown by arrows 40.

Disposed between the wall or screen 36 and the outer wall 12 of the vessel 10 and supported by bottom plate 26 is a flow directing baffle 42, which has a cylindrical shape. Baffle 42 serves to direct the process fluid, represented by arrows 39, entering the inlet nozzle 18 and arrows 40 inside the vessel, through a serpentine path that extends vertically along the outer wall 12 of the vessel 10 and then makes a generally U-shaped turn over the baffle 42, extends down along the passage defined by baffle 42 and wall 36, passes through the adsorbent bed 38 into the central conduit 34, and exits vessel 10 through nozzle or outlet 20 as shown by arrows 41.

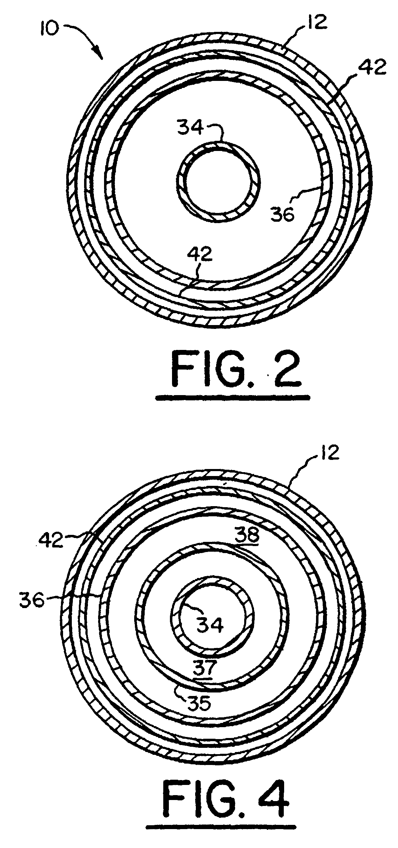

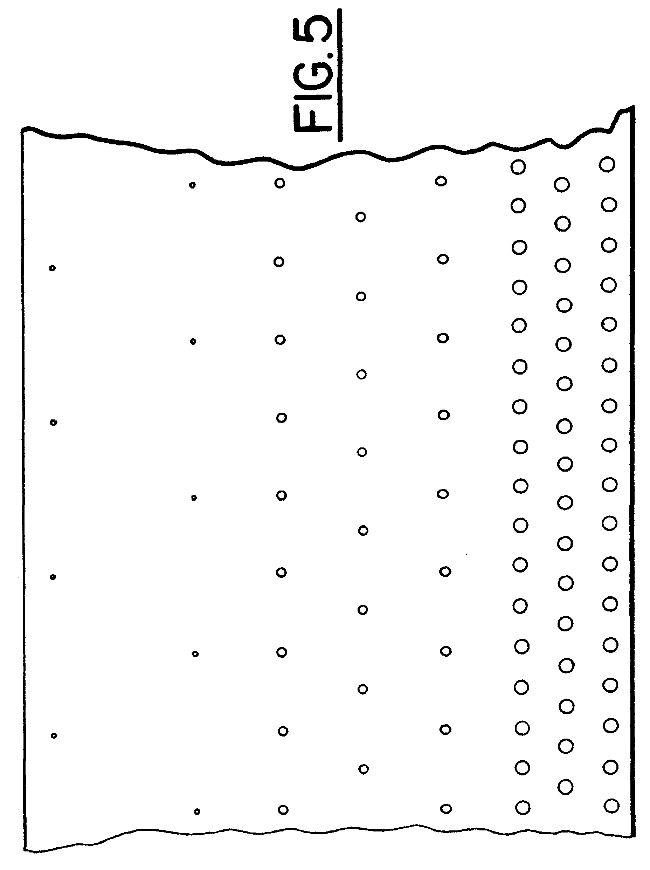

Figure 4 is a cross sectional view similar to Figure 2 except that a second internal wall or screen 35, having an annular configuration, is disposed between the central conduit 34 and screen 36 creating two distinct chambers 37 and 38 so that two different adsorbents can be placed in the vessel to treat the process fluid.

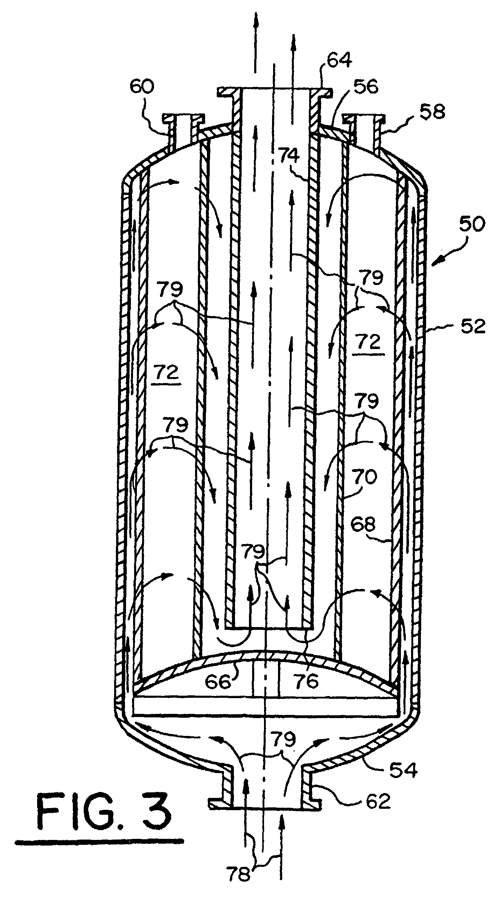

Figure 3 discloses an alternative vessel 50 having an outer wall 52, first or bottom hemispherical end 54, and second or top hemispherical end 56, adsorbent fill and removal ports 58, 60, inlet conduit or nozzle 62 and outlet conduit or nozzle 64, all of which are similar to the device of Figure 1. In a manner similar to the device of Figure 1 a suspended bottom plate 66 is used to support concentric internal screens 68, 70 which define an annular adsorbent bed 72. Annular adsorbent bed 72 can be divided into a multiplicity of different adsorbent beds in a manner similar to that described in relation to Figure 1.

Vessel 50 includes a central conduit or baffle 74, which extends from the second or exit nozzle 64 toward the suspended bottom 66 with end 76 of conduit 74 terminating in a manner to define a passage between the suspended bottom 66 and conduit or baffle 74. Arrows 78 show the process fluid entering the vessel 50, and arrows 79 show the path of the process fluid as it flows through the reactor 50. As shown in Figure 3 the process fluid 78 entering the reactor flows upwardly along the outer wall 52 of the vessel 50, radially through the bed 72, and downwardly along the inner conduit 70 in a generally U-shaped flow pattern. Process fluid then flows around the bottom of the central conduit or baffle 74, reverses direction so that it flows axially upward through baffle 74 and is directed out of vessel 50 via nozzle 64. Thus, in a manner similar to the flow in Figure 1 the process gas flows in a serpentine pattern through the vessel 50.

Figure 5 is a schematic representation of a portion of the wall of either the baffle 42 (Figure 1) or the baffle 74 (Figure 3) showing the means included in the baffle to permit a small amount of by-pass flow through the baffle, to correct flow maldistribution which is caused by frictional pressure losses in the flow channels adjacent the adsorbent beds (i.e. the channel formed by central conduit 34 and the channel between screen 36 and baffle 42 in Figure 1, or the channels between baffle 74 and screen 70, and between screen 68 and wall 52 in Figure 3). In the case of Figure 1, the means could be a series of small holes extending from the bottom toward the top of the baffle where the holes are larger and spaced closer at the bottom, and smaller and spaced further apart at the top of the baffle. The objective for this type of arrangement is to allow more by-pass flow through the bottom and less through the top of the baffle. One relationship between the holes is illustrated schematically in Figure 5. When designed properly it is unlikely the by-pass flow will exceed 10% of the total flow in order to correct maldistribution caused by frictional pressure drop.

In the case of the device of Figure 3 the larger holes would be at the top end of the baffle 74 adjacent the exit nozzle 64 progressing toward smaller and more spaced apart holes at the second or bottom end of 76 of the baffle 74, the intent being to allow more by-pass flow through the top and less through the bottom.

In either embodiment of the invention, the vessel can be oriented up-side-down from the way in which the orientation is shown in Figures 1 and 3. Orienting the vessels in this manner would require the fill-ports 22, 24, 58, 60 to be at the opposite end of the vessel.

Thus, according to the invention, a radial flow adsorption vessel is produced that has a U-flow manifolding arrangement, but with the inlet and outlet nozzles at opposite ends of the vessel. The concentric cylindrical baffle, outer-channel-baffle 42 of Figure 1 and center-channel-baffle 74 of Figure 3, causes the process fluid to reverse its axial flow direction as it proceeds through the vessel to achieve uniform distribution of flow through the adsorbent bed or beds.

The present invention achieves overall U-flow through the vessel, U-flow having better flow distribution than Z-flow, without requiring the inlet and outlet nozzles be at the same end of the vessel. Having the inlet and outlet nozzles at the same end of the vessel usually increases the cost of the reactor and the external piping connected to the vessel.

## Claims

1. A vessel (10;50) of the type having a cylindrical elongate outer shell (12;50) having first and second ends closed by end plates or heads (14,16;54,56), at least one annular shaped bed (38;72) containing particulate material disposed longitudinally between said outer shell (12;50) and a central axis of rotation of said shell, inlet means (18;62) on one end of said vessel to introduce a fluid into said vessel to pass through said bed and outlet means (20;64) on an opposite end of said vessel to remove said fluid from said vessel after passing through said bed (38;72),baffle means (42;74) in said vessel to impart a generally U-shaped flow pattern to said fluid whereby fluid flow through said vessel from said inlet means (18;62) to said outlet means (20;64) is in a generally serpentine pattern , **characterized in that** said baffle means is a cylindrical baffle (42;74) disposed between said outer shell (12) and said bed (38) or between said bed (72) and said central axis of rotation and **in that** said baffle includes by-pass means permitting a small portion of the fluid flow through the vessel to by-pass said baffle (42;74) to correct flow maldistribution attributed primarily to frictional pressure losses in the flow passages defined between the baffle (42;74) and the bed (38;72).

2. A vessel according to Claim 1, wherein said by-pass means includes passages through said baffle (42;74) permitting more by-pass fluid at an end of said baffle opposite to an end of said baffle which causes said fluid flow to reverse its direction.

3. A vessel according to Claim 1 or Claim 2, wherein said baffle (42) is disposed between said outer shell (12) and said bed (38).

4. A vessel according to Claim 2, wherein said baffle is a fluid impervious cylindrical baffle (42) disposed on an impervious bottom plate (26) supporting said annular bed (38) and extending longitudinally along a major portion of said bed, said baffle (42) defining a flow passage between itself and said outer wall (12) and between itself and said bed.

5. A vessel according to Claim 4, wherein said inlet means is adjacent said impervious bottom plate (26) and said bottom plate acts as a flow director to direct fluid to said passage between said outer wall (12) and said baffle (42).

6. A vessel according to Claim 4 or Claim 5, wherein said by-pass means includes a series of circular apertures varying in diameter and spacing from said end of said baffle (42) supported by said bottom plate (26) to an opposite end of said baffle, said diameter being larger and said spacing being closer at said end supported by said bottom plate, than at said opposite end of said baffle thereby permitting more by-pass fluid at an end of said baffle opposite to an end of said baffle which causes said fluid flow to reverse its direction.

7. A vessel according to Claim 1 or Claim 2, wherein said baffle (74) is disposed between said bed (72) and said axis of rotation of said shell (50).

8. A vessel according to Claim 7, wherein said baffle is a fluid impervious concentric baffle (74) disposed between said bed (72) and said axis of rotation of said shell (50).

9. A vessel according to Claim 8, wherein said baffle (74) is cylindrical and extends along a major portion of said bed (72) from a top of said vessel to a bottom of said vessel, said baffle defining a flow passage between itself and said axis of rotation and between itself and said bed (72).

10. A vessel according to Claim 8 or Claim 9, wherein said by-pass means includes a series of circular apertures varying in diameter and spacing from said end of said baffle (74) adjacent said top of said vessel to an opposite end of said baffle, said diameter being larger and said spacing being closer at said end of said baffle adjacent said top of said vessel thereby permitting more by-pass fluid at an end of said baffle opposite to an end of said baffle which causes said fluid flow to reverse its direction..

11. A vessel according to any one of the preceding Claims, wherein the by-pass flow does not exceed 10% of the total flow.

12. A vessel according to any one of the preceding Claims, wherein the particulate material is an adsorbent.

13. A method for imparting a generally U-shaped flow pattern to fluids flowing inside a vessel of the type having an elongate closed cylindrical housing having disposed therein at least one annular shaped bed of an adsorbent material, said housing having inlet and outlet means on respective opposite ends for admitting fluid to, and removing fluid from, said bed, comprising:
installing a cylindrical baffle inside said vessel between said outer shell and said bed or between said bed and said central axis of rotation to impart a generally U-shaped flow pattern to said fluid prior to said fluid entering said bed and/or after said fluid exits said bed whereby, fluid flow through said vessel from said inlet means to said outlet means is in a generally serpentine pattern, said baffle having by-pass means permitting a small portion of the fluid flow through the vessel to by-pass said baffle to correct flow maldistribution attributed primarily to frictional pressure losses in the flow passages defined between the baffle and the bed.

14. A method according to Claim 13, wherein said installation comprises installing a cylindrical baffle between an outer wall of said housing and said bed, said baffle directing fluid flowing through said housing along a path defined by said baffle and said outer wall of said housing and in a reverse direction along a path defined by said baffle and said bed.

15. A method according to Claim 13, wherein said installation comprises installing a cylindrical baffle between an axis of rotation of said housing and said bed, said baffle directing fluid flowing through said bed along a path defined by said baffle and said bed of said housing and in a reverse direction along a path defined by said baffle to direct fluid flow out of said vessel.

16. A method according to any one of Claims 13 to 15, wherein the by-pass flow does not exceed 10% of the total flow.

## Patentansprüche

1. Behälter (10; 50) des Typs mit einer zylindrischen, langgestreckten äußeren Umhüllung (12; 50) mit ersten und zweiten Enden, die durch Stirn-Platten oder - Köpfe verschlossen werden (14, 16; 54, 56), mit wenigstens einem ringförmigen Bett (38; 72), das partikelförmiges Material enthält, das in Längsrichtung zwischen der äußeren Umhüllung (12; 50) und einer zentralen Rotationsachse der Umhüllung angeordnet ist, mit einer Einlassanordnung (18; 62) an einem Ende des Behälters, um ein fluides Medium in den Behälter einzuführen, so dass es das Bett passieren kann, und mit einer Auslassanordnung (20; 64) an einem gegenüberliegenden Ende des Behälters, um das fluide Medium aus dem Behälter nach Passieren des Bettes (38; 72) zu entfernen, mit einer Ablenkanordnung (42; 74) in dem Behälter, um dem fluiden Medium ein im Wesentlichen U-förmiges Strömungsmuster zu geben, durch die Strömung des fluiden Mediums durch den Behälter von der Einlassanordnung (18; 62) zu der Auslassanordnung (20; 64) ein im Allgemeinen serpentinenartiges Muster hat, **dadurch gekennzeichnet, dass** die Ablenkanordnung eine zylindrische Ablenkplatte (42; 74) ist, die zwischen der äußeren Umhüllung (12) und dem Bett (38) oder zwischen dem Bett (72) und der zentralen Rotationsachse angeordnet ist, und dass die Ablenkplatte eine Bypass-Anordnung enthält, die zulässt, dass ein kleiner Teil der Strömung des fluiden Mediums durch den Behälter die Ablenkplatte (42, 74) umgeht, um eine Fehlverteilung der Strömung zu korrigieren, die primär auf Reibungsdruckverluste in den Strömungspassagen zurückgeht, die zwischen der Ablenkplatte (42; 74) und dem Bett (38; 72) definiert sind.

2. Behälter nach Anspruch 1, wobei die Bypass-Anordnung Durchgänge durch die Ablenkplatte (42; 74) enthält, die an einem Ende der Ablenkplatte gegenüberliegend zu einem Ende der Ablenkplatte mehr Bypass-Fluid ermöglicht, so dass die Strömung des fluiden Mediums ihre Richtung umkehrt.

3. Behälter nach Anspruch 1 oder Anspruch 2, wobei die Ablenkplatte (42) zwischen der äußeren Umhüllung (12) und dem Bett (38) angeordnet ist.

4. Behälter nach Anspruch 2, wobei die Ablenkplatte eine für das fluide Medium undurchdringliche, zylindrische Ablenkplatte (42) ist, die auf einer undurchlässigen Bodenplatte (26) angeordnet ist, die das ringförmige Bett (38) haltert und sich in Längsrichtung über einen größeren Teil des Bettes erstreckt, wobei die Ablenkplatte (42) einen Strömungsdurchgang zwischen sich selbst und der äußeren Wand (12) sowie zwischen sich selbst und dem Bett definiert.

5. Behälter nach Anspruch 4, wobei die Einlassanordnung sich in der Nähe der undurchlässigen Bodenplatte (26) befindet und die Bodenplatte (26) als Strömungs-Richtungseinrichtung ("Strömungs-Direktor") wirkt, um das fluide Medium zu dem Durchgang zwischen der äußeren Wand (12) und der Ablenkplatte (42) zu leiten.

6. Behälter nach Anspruch 4 oder Anspruch 5, wobei die Bypass-Anordnung eine Folge von kreisförmigen Öffnungen enthält, die im Durchmesser und im räumlichen Abstand von dem Ende der Ablenkplatte (42) haben, das von der Bodenplatte (26) gehaltert wird, zu einem gegenüberliegenden Ende der Ablenkplatte variieren, wobei der Durchmesser größer und der Abstand näher bei dem Ende, das von der Bodenplatte gehaltert wird, als an dem gegenüberliegenden Ende der Ablenkplatte ist, wodurch mehr Bypass-Fluid an einem Ende der Ablenkplatte gegenüber dem Ende der Ablenkplatte ermöglicht wird, so dass die Strömung des fluiden Mediums ihre Richtung umkehren kann.

7. Behälter nach Anspruch 1 oder Anspruch 2, wobei die Ablenkplatte (74) zwischen dem Bett (72) und der Rotationsachse der Umhüllung (50) angeordnet ist.

8. Behälter nach Anspruch 7, wobei die Ablenkplatte eine für das fluide Medium undurchlässige, konzentrische Ablenkplatte (74) ist, die zwischen dem Bett (72) und der Rotationsachse der Umhüllung (50) angeordnet ist.

9. Behälter nach Anspruch 8, wobei die Ablenkplatte (74) zylindrisch ist und sich über einen größeren Teil des Bettes (72) von dem oberen Teil bzw. der Spitze des Behälters zu dem Boden des Behälters erstreckt und die Ablenkplatte einen Strömungsdurchgang zwischen sich selbst und der Rotationsachse sowie zwischen sich selbst und dem Bett (72) definiert.

10. Behälter nach Anspruch 8 oder Anspruch 9, wobei die Bypass-Anordnung eine Folge von kreisförmigen Öffnungen enthält, deren Durchmesser und Abstand von dem Ende der Ablenkplatte (74) in der Nähe der Spitze bzw. des oberen Endes des Behälters bis zu einem gegenüberliegenden Ende der Ablenkplatte variieren, wobei der Durchmesser größer und der Abstand näher bei dem Ende der Ablenkplatte in der Nähe der Spitze des Behälters ist, wodurch mehr Bypass-Fluid an einem Ende der Ablenkplatte gegenüber einem Ende der Ablenkplatte ermöglicht wird, das ermöglicht, dass die Strömung des fluiden Mediums ihre Richtung umkehren kann.

11. Behälter nach einem der vorhergehenden Ansprüche, wobei die Bypass-Strömung nicht 10% der Gesamtströmung übersteigt.

12. Behälter nach einem der vorhergehenden Ansprüche, wobei das teilchenförmige Material ein Adsorptionsmittel ist.

13. Verfahren zur Erzeugung bzw. Erteilung eines im Allgemeinen U-förmigen Strömungsmuster für fluide Medien, die im Inneren eines Behälters des Typs mit einem langgestreckten, geschlossenen, zylindrischen Gehäuse strömen, in dem wenigstens ein ringförmiges Bett aus einem Adsorptionsmittel-Material angeordnet ist, wobei das Gehäuse eine Einlassanordnung und eine Auslassanordnung an den jeweiligen gegenüberliegenden Enden aufweist, um das fluide Medium zu dem Bett zuzulassen und aus dem Bett zu entnehmen, aufweisend:
Einbauen einer zylindrischen Ablenk- bzw. Ablenkplatte im Inneren des Behälters zwischen dem Gehäuse bzw. der äußeren Umhüllung und dem Bett oder zwischen dem Bett und der zentralen Rotationsachse, um dem fluiden Medium vor seinem Eintritt in das Bett und/oder nach seinem Austritt aus dem Bett ein im Allgemeinen U-förmiges Strömungsmuster zu geben, wodurch die Fluid-Strömung durch den Behälter von der Einlassanordnung zu der Auslassanordnung ein im Allgemeinen serpentinenförmiges Muster hat, wobei die Ablenkplatte eine Bypass-Anordnung enthält, die es ermöglicht, dass ein kleiner Teil der Fluid-Strömung durch den Behälter die Ablenkplatte umgeht, um eine Strömungs-Fehlverteilung zu korrigieren, die primär auf Reibungsdruckverluste in den Strömungsdurchgängen zurückzuführen ist, die zwischen der Ablenkplatte und dem Bett definiert sind.

14. Verfahren nach Anspruch 13, wobei das Einbauen das Einbauen einer zylindrischen Ablenkplatte zwischen einer äußeren Wand des Gehäuses und dem Bett aufweist, wobei die Ablenkplatte das fluide Medium, das durch das Gehäuse strömt, längs eines Pfades leitet, der durch die Ablenkplatte und die äußere Wand des Gehäuses definiert ist, und in umgekehrter Richtung längs eines Pfades, der durch die Ablenkplatte und das Bett definiert ist.

15. Verfahren nach Anspruch 13, wobei das Einbauen aufweist das Einbauen einer zylindrischen Ablenkplatte zwischen einer Rotationsachse des Gehäuses und dem Bett, wobei die Ablenkplatte das fluide Medium, das durch das Bett strömt, längs eines Pfades, der durch die Ablenkplatte und das Bett des Gehäuses definiert wird, und in umgekehrter Richtung längs eines Pfades leitet, der durch die Ablenkplatte definiert wird, um die Fluid-Strömung aus dem Behälter heraus zu leiten.

16. Verfahren nach einem der Ansprüche 13 bis 15, wobei die Bypass-Strömung 10% der Gesamtströmung nicht übersteigt.

## Revendications

1. Réacteur (10, 50) du type comprenant une enceinte extérieure allongée cylindrique (12, 50) comportant des première et seconde extrémités fermées par des plaques ou têtes d'extrémité (14, 16, 54, 56), au moins un lit de forme annulaire (38, 72) contenant un matériau en particules disposé longitudinalement entre ladite enceinte extérieure (12, 50) et un axe central de rotation de ladite enceinte, un moyen d'entrée (18, 62) sur une première extrémité dudit réacteur pour introduire un fluide dans le directeur pour qu'il passe au travers dudit lit, et un moyen de sortie (20, 64) sur une extrémité opposée dudit réacteur pour enlever ledit fluide dudit réacteur après être passé au travers dudit lit (38, 72), un moyen de déflecteur (42, 74) dans ledit réacteur pour communiquer un profil d'écoulement sensiblement en forme de U audit fluide, grâce à quoi l'écoulement de fluide au travers dudit réacteur dudit moyen d'entrée (18, 62) audit moyen de sortie (20, 64) et d'un profil sensiblement tortueux, **caractérisé en ce que** ledit moyen de déflecteur est un déflecteur cylindrique (42, 74) disposé entre ladite enceinte extérieure (12) et ledit lit (38) ou entre ledit lit (72) et ledit axe central de rotation et **en ce que** ledit déflecteur comprend un moyen de dérivation permettant à une petite partie de l'écoulement de fluide au travers du réacteur de contourner ledit déflecteur (42, 74) pour corriger une mauvaise répartition de l'écoulement attribuée principalement à des pertes de pression par frottement dans les passages d'écoulement définis entre le déflecteur (42, 74) et le lit (38, 72).

2. Réacteur selon la revendication 1, dans lequel ledit moyen de dérivation comprend des passages au travers dudit déflecteur (42, 74) permettant davantage de fluide de dérivation au niveau d'une extrémité dudit déflecteur opposée à une extrémité dudit déflecteur qui provoque le changement de sens dudit écoulement de fluide.

3. Réacteur selon la revendication 1 ou la revendication 2, dans lequel ledit déflecteur (42) est disposé entre ladite enceinte extérieure (12) ledit lit (38).

4. Réacteur selon la revendication 2, dans lequel ledit déflecteur est un déflecteur cylindrique étanche aux fluides (42) disposé sur une plaque inférieure étanche (26) supportant ledit lit annulaire (38) et s'étendant longitudinalement le long d'une majeure partie dudit lit, ledit déflecteur (42) définissant un passage d'écoulement entre lui-même et ladite paroi extérieure (12) et entre lui-même et ledit lit.

5. Réacteur selon la revendication 4, dans lequel ledit moyen d'entrée est adjacent à ladite plaque inférieure étanche (26) et ladite plaque inférieure agit en tant qu'élément directeur d'écoulement pour diriger le fluide vers ledit passage entre ladite paroi extérieure (12) et ledit déflecteur (42).

6. Réacteur selon la revendication 4 ou la revendication 5, dans lequel ledit moyen de dérivation comprend une série d'ouvertures circulaires variant en diamètre et s'espaçant depuis ladite extrémité dudit déflecteur (42) supportée par ladite plaque inférieure (26) vers une extrémité opposée dudit déflecteur, ledit diamètre étant plus grand et ledit espacement étant plus rapproché au niveau de ladite extrémité supportée par ladite plaque inférieure qu'au niveau de ladite extrémité opposée dudit déflecteur, permettant ainsi davantage de fluide de dérivation au niveau d'une extrémité dudit déflecteur opposée à une extrémité dudit déflecteur qui provoque ledit changement de sens dudit écoulement de fluide.

7. Réacteur selon la revendication 1 ou la revendication 2, dans lequel ledit déflecteur (74) est disposé entre ledit lit (72) et ledit axe de rotation de ladite enceinte (50).

8. Réacteur selon la revendication 7, dans lequel ledit déflecteur est un déflecteur concentrique étanche aux fluides (74) disposé entre ledit lit (72) et ledit axe de rotation de ladite enceinte (50).

9. Réacteur selon la revendication 8, dans lequel ledit déflecteur (74) est cylindrique et s'étend le long d'une majeure partie dudit lit (72) d'un somment dudit réacteur à un fond dudit réacteur, ledit déflecteur définissant un passage d'écoulement entre lui-même et ledit axe de rotation et entre lui-même et ledit lit (72).

10. Réacteur selon la revendication 8 ou la revendication 9, dans lequel ledit moyen de dérivation comprend une série d'ouvertures circulaires variant en diamètre et s'espaçant de ladite extrémité dudit déflecteur (74) adjacente audit sommet dudit réacteur à une extrémité opposée dudit déflecteur, ledit diamètre étant plus grand et ledit espacement étant plus rapproché au niveau de ladite extrémité dudit déflecteur adjacente audit sommet dudit réacteur, permettant ainsi davantage de fluide de dérivation au niveau d'une extrémité dudit déflecteur opposée à une extrémité dudit déflecteur qui provoque ledit changement de sens dudit écoulement de fluide.

11. Réacteur selon l'une quelconque des revendications précédentes, dans lequel l'écoulement de dérivation ne dépasse pas 10 % de l'écoulement total.

12. Réacteur selon l'une quelconque des revendications précédentes, dans lequel le matériau en particules est un adsorbant.

13. Procédé destiné à communiquer un profil d'écoulement sensiblement en forme de U à des fluides circulant à l'intérieur d'un réacteur du type comprenant une enceinte cylindrique fermée allongée ayant, disposé dans celle-ci, au moins un lit de forme annulaire d'un matériau d'adsorbant, ladite enceinte comprenant des moyens d'entrée et de sortie sur des extrémités opposées respectives destinés à admettre un fluide vers et à enlever un fluide depuis ledit lit, comprenant :
l'installation d'un déflecteur cylindrique à l'intérieur dudit réacteur entre ladite enceinte extérieure et ledit lit ou entre ledit lit et ledit axe central de rotation pour communiquer un profil d'écoulement sensiblement en forme de U audit fluide avant que ledit fluide ne pénètre dans ledit lit et/ou après que ledit fluide sort dudit lit, grâce à quoi l'écoulement du fluide dans ledit réacteur dudit moyen d'entrée audit moyen de sortie est d'un profil généralement tortueux, ledit déflecteur comprenant un moyen de dérivation permettant à une petite partie de l'écoulement de fluide dans le réacteur de contourner ledit déflecteur pour corriger une mauvaise distribution de l'écoulement attribuée principalement à des pertes de pression par frottement dans les passages d'écoulement définis entre le déflecteur et le lit.

14. Procédé selon la revendication 13, dans lequel ladite installation comprend l'installation d'un déflecteur cylindrique entre une paroi extérieure de ladite enceinte et ledit lit, ledit déflecteur dirigeant le fluide circulant dans ladite enceinte le long d'un trajet défini par ledit déflecteur et ladite paroi extérieure de ladite enceinte et dans un sens inverse le long d'un trajet défini par ledit déflecteur et ledit lit.

15. Procédé selon la revendication 13, dans lequel ladite installation comprend l'installation d'un déflecteur cylindrique entre un axe de rotation de ladite enceinte et ledit lit, ledit déflecteur dirigeant le fluide circulant dans ledit lit le long d'un trajet défini par ledit déflecteur et ledit lit de ladite enceinte et dans un sens inverse le long d'un trajet défini par ledit déflecteur, pour diriger l'écoulement de fluide hors dudit réacteur.

16. Procédé selon l'une quelconque des revendications 13 à 15, dans lequel l'écoulement de dérivation ne dépasse pas 10 % de l'écoulement total.
